# EUROPEAN PATENT SPECIFICATION

(11) **EP 2 014 838 B1**
(45) Date of publication and mention of the grant of the patent: **03.04.2013**
(21) Application number: 08159650.4
(22) Date of filing: 03.07.2008
(51) Int. Cl.: E03C 1/02, F16L 5/14

(54) **Wall bend fixture for water pipes leading through a wall**
Rohreinführungselement zum Einsetzen von Wasserleitungen durch eine Wand
Manchon pour l'introduction des tuyaux dans le mur

(30) Priority: 03.07.2007 SE 0701614
(43) Date of publication of application: 14.01.2009
(73) Proprietor: Villeroy & Boch Gustavsberg AB, 447 81 Vårgårda (SE)
(72) Inventor: Rydetorp, Björn, 447 95, Vårgårda (SE); Nothall, Lars, 447 33, Vårgårda (SE)
(74) Representative: Valea AB

(56) References cited:
- WO-A-92/11484
- DE-U1- 29 614 487
- JP-A- 8 144 335
- US-A- 1 679 276
- US-A- 1 725 987

## Description

### TECHNICAL FIELD

The present invention relates to a wall bend fixture for installing at least one water pipe arranged in a protective pipe by means of so called pipe-in-pipe technique.

### BACKGROUND

A common way to install water pipes in buildings is to arrange inside the walls, so that they later can be brought out from the wall and into the room where the water is needed. Usually so called pipe-in-pipe technique is used to install water pipes. Pipe-in-pipe technique generally means that a water pipe is led trough a surrounding protective pipe. The protective pipe protects the water pipe from outer influences meanwhile, in the event of leakage; it prevents water from leaking out inside the wall to cause damages due to damp.

When installing, and during transition to visible water pipes for example to bathrooms, laundry facilities, and other wet areas, special requirements are often needed, not only with respect to leakage but also to simplicity of installation. Generally, two different types of devices to ease installation and to improve leakage safety can be found within the pipe-in-pipe technique. Both of these devices are positioned inside the wall in connection to the room to which the water pipe is intended to be brought out to.

The first type is usually namned wall boxes and is **characterized in that** they exhibit sealed boxes with a water coupling inside the box. The water pipe is connected to the water pipe coupling, which in turn is connected to a shower blender in a bathroom. An example of such a wall box is disclosed in the patent publication of SE 524 719 C2. In the publication the wall box is described with a funnel like lower part to which a protective pipe can be threaded onto and sealed. The water pipe, which is led in the protective pipe, is installed through the funnel and connected to an angled coupling. The angled coupling is in itself arranged in a housing assembled with the funnel like lower part and comprises a passage part which is intended to extend out through the wall which it is intended to be brought through.

Water pipe armature is thereafter intended to be fitted to the coupling to thereby provide a leakage safe assembly. However, wall boxes of the just mentioned kind exhibit some drawbacks, despite the fact that they are considered to be leakage safe. For example, the pipe joint which is arranged between the coupling and the water pipe, which is arranged inside the wall can burst. Should such leakage occur, there is a risk of leaking water to penetrate into the wall the wall frame structure. Another example of a wall box with a coupling inside the a housing which is intended to be positioned inside the wall is described in WO 91/06715, although also that described solution exhibit the just mentioned drawbacks. Also document JP 08 144 335 shows so called wall box coupling.

The other type of device is generally referred to as a wall bend fixture and has no coupling inside the wall. An example of such a wall bend fixture is described in the publication of WO 01/48326 A1. The document describes a wall bend fixture with a housing specially designed to bend a water pipe 90°. The protective pipe is attached to the lower part of the housing. A passage part is arranged to the housing through which the water pipe can be brought out. One big problem with such wall bend fixture is that the protective pipe is connected to the wall bend fixture in a disadvantageous position which provides for a risk of leakage inside the wall, even though there is no water coupling inside of the wall.

In those cases were the water pipe is intended to be drawn into a wet room, such as a bath room, which has a moisture barrier in the wall, the two just mentioned devices have additional drawbacks. Walls of a wet room are generally coated with a barrier layer to prevent water from penetrating into the wall, thereafter the wall is covered with tile. Alternatively, the wall is coated with a termoplastic material, such as a wet room rug which generally does not need a barrier layer. The installer must after mounting and the preparation of the wall, drill holes through the wall to attach the water pipe armature to the wall and usually the wall framework. The installer is thereby drilling holes through the barrier layer alternatively the wet room rug, which significantly increases the risk of having water or water vapour penetrating the wall.

### SUMMARY OF INVENTION

The above mentioned problems are at least partly solved by the present invention by a wall bend fixture for installing a protective pipe, and water pipe arranged in the protective pipe, wherein the water pipe is intended to be brought through at least a part of a structure. The structure comprises a first surface, and to the first surface an opposing second surface. At least one in passage is arranged to the wall bend fixture, wherein the in passage is intended to receive the protective pipe. Additionally is an out passage arranged to the wall bend fixture from which at least the water pipe, which is arranged in the protective pipe, can be conducted out from the mentioned wall bend fixture. The out passage comprises a passage part which extends from the mentioned wall bend fixture and which is intended to extend past the first surface of the structure after mounting. The wall bend fixture further comprises a contact surface adapted to contact the first surface of the structure after mounting. The passage part is configured to receive the protective pipe so that after mounting the protective pipe can extend into the passage part. This provides for a safe drainage of possible water due to leakage. The protective pipe, according to the present invention, is thus intended to extend into the passage part which comprises fastening means for a fastener. The present invention provides an installer with a device which is simple mount and which does not require to drill a hole through e.g. tile or a barrier layer afterwards to fasten water pipe armature. The present invention provides for a relatively leakage safe device.

The leakage safety can further be improved by adapting the wall bend fixture so that the protective pipe after mounting is arranged to extend past the first surface of the structure. Even better leakage safety is provided when the wall bend fixture is adapted to so that the protective pipe is intended to extend past the second surface of the structure. Between the protective pipe and the passage part is preferably a water tight sealing arranged. The water tight sealing prevents water from penetrating in between the protective pipe and the passage part should there be any leakage between the water pipe and the fastener or any coupling arranged to the fastener. Instead, during a possible leakage, the water will be forced out on the outside of the structure and thereby visible and easy to discover. The passage part has preferably at least partly a cylindrical form with an outside and an inside, wherein the fastening means comprises threads arranged on the outside. The fastening means can in an alternative embodiment be arranged on the inside of the passage part and then preferably be in the form of threads.

In an embodiment of the present invention, the contact surface is arranged on the supportive part and is then forming an integrated part of the supportive part, such an embodiment has the advantage of using the supportive part as a contact surface. As an alternative, the contact surface can be arranged to a part of the passage part. The fastening means is preferably arranged to provide for a tensional force after mounting with the mentioned fastener between the contact surface and the mentioned fastener. In an embodiment according to the present invention fastening means is arranged to the outside and the inside of the passage part, for example both the inside and the outside can have the threads. This has the advantage that the wall bend fixture can be used with fasteners of different types, i.e. both fasteners which are threaded on the outside and the inside. The embodiment provides for a more user friendly and flexible device.

The passage part can, in an embodiment according to the present invention, be adapted to extend from the first surface of the structure and out and past the second surface of the structure after being mounted. The advantage of this is that any leakage can be detected at an early stage as the risk of having any leakage inside of the wall is significantly reduced.

In an embodiment according to the present invention the passage part comprises a gradually increase or decrease of the inner diameter. By gradually or continuously reduce the inner diameter, a sealing between the protective pipe and the passage part can be simplified. The passage part can, in an embodiment according to the present invention, be arranged with a gradually reduction of the inner diameter of the passage part. The passage part thereby comprises at least one proximal inner diameter Dᵢ₁ and at least one distal inner diameter Dᵢ₂. The proximal and the distal inner diameter exhibit the relationship Dᵢ₁ > Dᵢ₂. Such an embodiment has been shown to be simple to manufacture and to give a good leakage safety. Embodiments in which the passage part is threaded on the inside it is preferred the smaller inner diameter which is threaded. A third inner diameter Dᵢ₃ can preferably be arranged in the passage part, the proximal, distal and the third inner diameter then preferably exhibit the relationship Dᵢ₁ > Dᵢ₂ > Dᵢ₃. In those cases more than two gradually reducing inner diameters are used or when a continuously reducing inner diameter is used, protective pipes with different diameters can be used to the wall bend fixture. This provides for a user friendly and flexible wall bend fixture.

The contact surface can be an integrated part of the wall bend fixture or a separate part, which is attachable to the wall bend fixture. For example, the contact surface can be fixated to the passage part via an attachment ring and at least one groove extending around the periphery of the passage part, preferably 2-10 grooves. The wall bend structure can then be applied to structures of varying thickness such as wall of varying thickness. The embodiment is flexible and user friendly for the installer. In another embodiment, the whole inside and/or the outside of the passage part is threaded. During installation of such a wall bend fixture parts of the passage part can simply be cut off if it extends to far, to provide for an appropriate length.

The wall bend fixture is provided, in an embodiment, with a supportive section which is adapted to support the mentioned protective pipe during and/or after being mounted. In such an embodiment, the in passage and the out passage is preferably arranged to the mentioned supportive section.

The present invention also relates to an fastener for use together with a wall bend fixture comprising attachment means for said fastener, preferably a wall bend fixture according to claims 1-17. The fastener comprises a first and a second coupling device, wherein the first coupling device is arranged to be connected to the wall bend fixture. The first coupling device additionally comprises a contact surface arranged to contact the mentioned structure after mounting, and the second coupling device is arranged to connect to water pipe armature. The fastener takes away all the needs for attaching water pipe armature directly to the wall or to a wall frame structure. By this, the need of drilling through a wall, which for instance is provided with a moisture barrier, is completely removed. As such, the risk of having moisture penetrating into the wall and to cause damages due to damp such as formation of mould.

In an embodiment, the first coupling device comprises a threaded part for attachment with the mentioned wall bend fixture, a corresponding threaded part on the wall bend fixture is of course necessary in that case. The threaded part can advantageously be arranged on the inside or the outside of the first coupling device. In order for the fastener to be simple to connect with water pipe armature after mounting, the first coupling device and the second coupling device is preferably rotateable with respect to each other. The first coupling device preferably comprises a fixed pipe part to which the second coupling device is swivel connected, i.e. it is rotateable.

The second coupling device is in an embodiment inwardly threaded coupling device, for example to be connected with a shower blender.

The contact surface is preferably arranged on the first coupling device and as such it is a radially protruding wall plate.

The present invention additionally relates to a system comprising a wall bend fixture and a fastener according to the present invention. Such a system is arranged for installing a protective pipe, and a water pipe in the protective pipe. The water pipe is intended to be brought at least partly through a structure comprising a first surface, and an opposing second surface to the first surface. The system comprises a wall bend fixture comprising at least one in passage which is intended to receive the protective pipe, and at least one out passage from which at least the water pipe, which is arranged in the protective pipe, can be brought out from the wall bend fixture. The out passage comprises a passage part which is intended to extend past the first surface of the structure after mounting. The wall bend fixture also comprises a contact surface adapted to contact the structure first surface after mounting. The passage part is additionally configured to receive the protective pipe so that the protective pipe after being mounted extends into the passage part. The passage part also comprises fastening means for a fastener.

### DEFINITIONS

With the term "water pipe armature" is meant devices such as pipe couplings, ball valves, taps or the like.
With the term "structure" is meant a part of, or a whole, wall, door, ceiling, floor or the like. With the term "contact" is meant something which lies indirectly or directly in contact with something else.
With the term "fastener" is meant devices which can be used to attach something with.

### BRIEF DESCRIPTION OF THE DRAWINGS

Figure 1 shows a cross section in perspective of the present invention after being mounted in a wall.
Figure 2 shows a wall bend fixture in perspective in according to an embodiment of the present invention.
Figure 3 show the wall bend fixture of figure 2 in perspective, after being mounted with a connection plate, which has been provided with water pipe armature intended to be connected with a shower blender.
Figure 4 shows a cross section of the wall bend fixture as shown in figure 2 and 3 after being mounted in a wall.
Figure 5 shows a cross section of an alternative embodiment, according to the present invention, partly mounted in a wall.
Figure 6 shows a cross section of an alternative embodiment, according to the present invention, partly mounted in a wall.

### DETEILED DESCRIPTION OF PREFERRED EMBODIMENTS

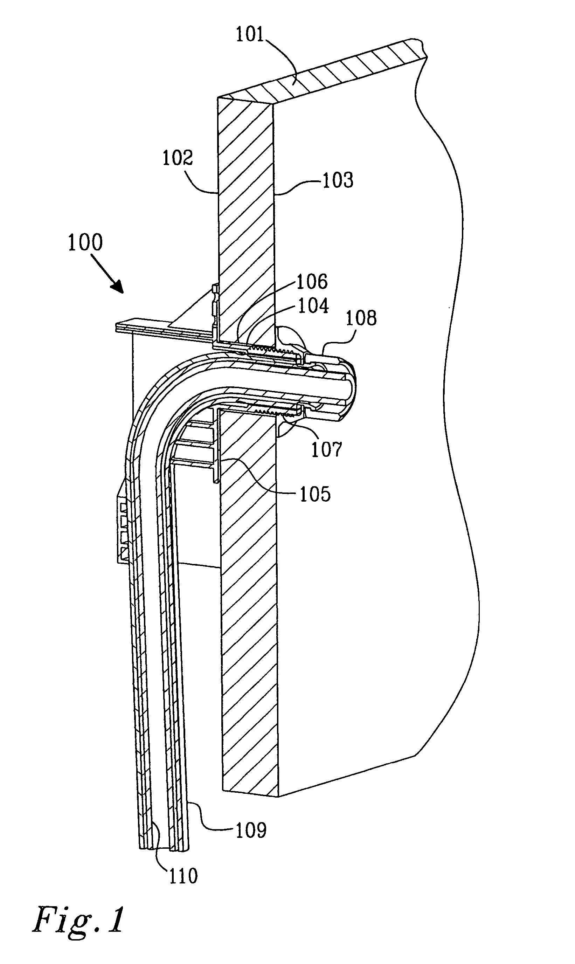

Figure 1 shows a wall bend fixture for bringing up a protective pipe and a water pipe arranged in the protective pipe, according to one embodiment of the present invention. Such technique is usually referred to as pipe-in-pipe technique. Figure 1 shows a wall bend fixture 100 arranged to a part of a wall 101 with a first and a second surface 102, 103. For example, isolating material may be present at the first surface of the wall 101, i.e. it can be the inside of the wall which then shows the wall bend fixture in a preferred use, i.e. to install a water pipe from a wall and into a room, and on the side which faces towards the second surface of the wall 101, a bath room. A passage part 104 of the wall bend fixture 100 extends through the wall 101 from the first surface 102 of the wall 101 and past the second surface 103 of the wall 101. The wall bend fixture 100 also exhibit a contact surface 105 which in indirectly in contact via an intermediate plate (not shown) to the first surface 102 of the wall 101. The outside 106 of the passage part 104 exhibits fastening means 107, in the form of threads, for attaching a fastener 108. In the shown embodiment the fastener 108 comprises a connection plate attached to a pipe coupling for a shower blender. In the passage part 104, i.e. that part which extends through the wall 101, is a protective pipe 109 and a water pipe 110 brought out. The protective pipe 109 is brought out all the way up to the second surface 103 of the wall 101 while the water pipe 110 has been drawn past the second surface 103 of the wall 101 and into the fastener 108 where the water pipe 110 can be connected to a water tight coupling for example a shower blender in a bath room. The fastener 108 is screwed to the wall bend fixture through fastening means 107, i.e. the threaded surface, so that a tension force arises between the contact surface 105 and the fastener 108. The tensional force which arises provides for a strong coupling and keeps both the wall bend fixture 100 and the fastener 108 fixed in their position.

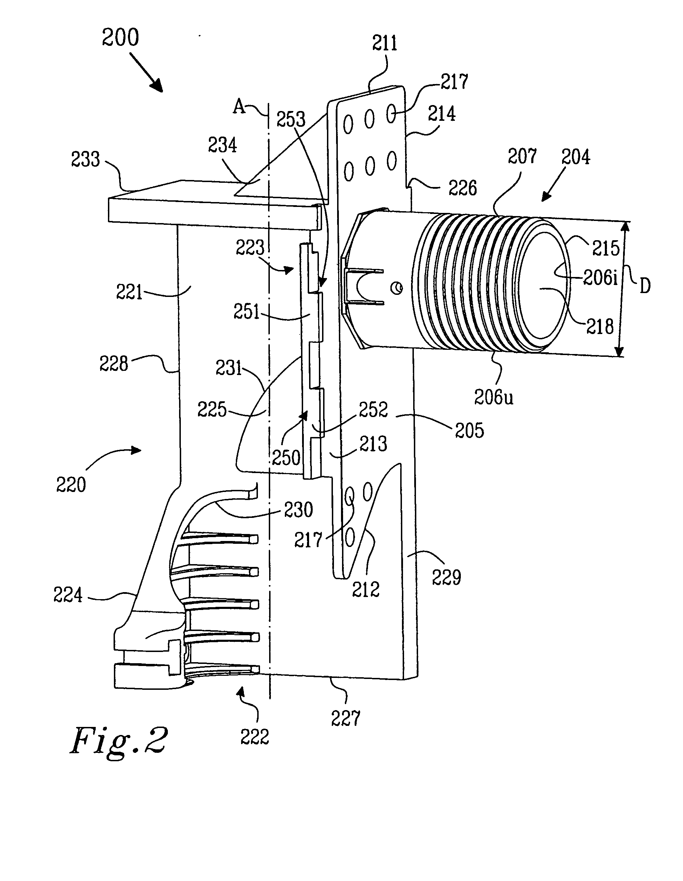

Figure 2 shows a wall bend fixture 200 according to an embodiment according to the present invention in greater detail. The wall bend fixture 200, has a lengthwise centre line A and comprises a supportive section 220, which in the shown embodiment comprises a supportive plate 221 comprising an in passage 222 and an out passage 223. From the supportive plate 221 are a first and a second pipe holder 224, 225 protruding in a substantially perpendicular direction relative to the supportive plate 221. The supportive plate 221 also exhibits a first and a second short side 226, 227 and a first and a second long side 228, 229.

A first pipe holder 224 is arranged in association to the first long side 228 of the supportive plate 221, and exhibit an attachment part 230 with a half circle formed cross section which extends parallel with the first long side 228 of the supportive plate 221. A second pipe holder 225 is arranged in association with the second long side 229 and exhibits a radial curvature 231, which extends substantially from the length wise centre line A of the supportive plate 221 to the out passage 223 of the supportive plate 221. The radial curvature 231 of the second pipe holder 225 is intended to support the protective pipe during and/or after being brought out from the in passage 222 to the out passage 223, dependent on how the installation is done.

A contact surface 205 comprises, in the shown embodiment, of a plate with a first and a second short side 211, 212 and a first and a second long side 213, 214. The second long side 214 of the contact surface 205 is arranged perpendicular to the second long side 229 of the supportive plate 221 wherein the first short side 211 of the contact surface is somewhat displaced with respect to the first short side 226 of the supportive plate 221, so that the contact surface 205 extends past the first short side 226 of the supportive plate parallel with the lengthwise centre line A. From the first short side 226 of the supportive plate the contact surface 205 extends slightly longer than half of length of the supportive plate in a direction towards the second short side 227 of the supportive plate 221. The contact surface 205 comprises in the shown embodiment several attachment holes 217 through which the wall bend fixture 200 can e.g. be screwed to the first surface of the structure which the water pipe is intended to be installed through. No attachment is required to the second side of the structure, i.e. the surface of the wall which is directed towards the bath room. This permits an installer to avoid drilling a hole in the wall from that side, which in wet rooms disables the need for drilling through barrier layers and tile layers. The contact surface 205 is in the shown embodiment of the present invention an integrated part of the supportive section 220.

The in passage 222 is arranged in association to the second short side 227 of the supportive plate 221 and functions as an in passage for a protective pipe (see for instance figure 1) to the wall bend fixture 200. The in passage 222 does not exhibit, in the shown embodiment according to the present invention, any specific form but is generally a direction from which a protective pipe can be brought into the wall bend fixture 200 and onto the supportive plate 221.

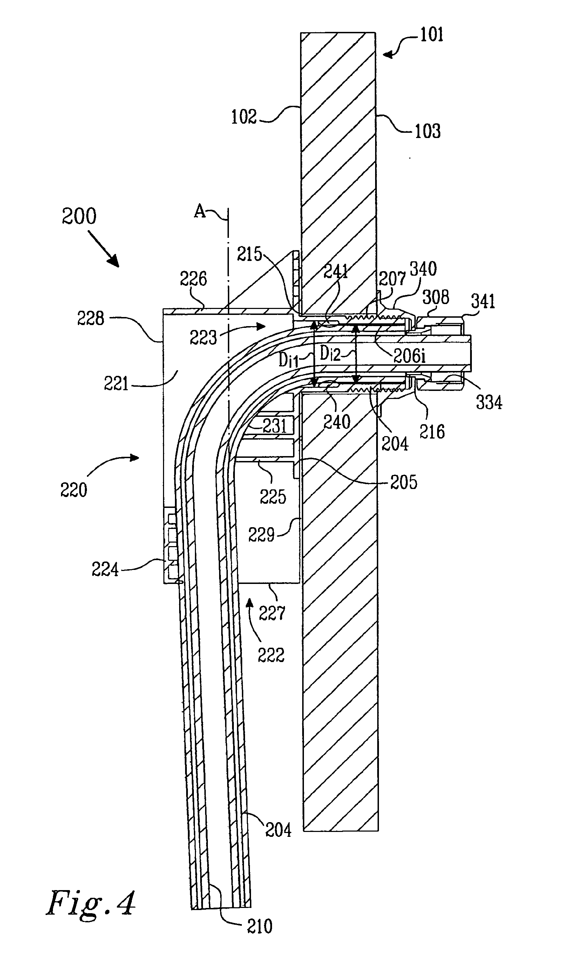

The wall bend fixture 200 and the supportive section 220 exhibit as mentioned earlier also an out passage 223 from which a protective pipe and a water pipe can be directed out from the wall bend fixture 200. The out passage 223 is arranged in association with the second long side 229 of the supportive plate 221 and close to the first short side 226 of the supportive plate 221. The out passage 223 comprises a passage part 204 which is intended to at least partly extend through the structure which delimits the room, or the place, to which the water pipe is intended to be installed to. In the shown embodiment of figure 4, the structure consists of a wall.

The passage part 204 comprises a proximal end 215 and a distal end 216, and projects from the contact surface 205 which is transverse to the supportive section 220. The passage part 204 exhibit , in the shown embodiment, a circular cross section with an outer diameter D. The outer diameter D is preferably 15-100 mm, preferably 15-45 mm. The passage part has an outside 206u and an inside 206i. Attachment means 207 in the form of threads are arranged on the outside 206u of the passage part 204 and extends from the distal end 216 of the passage par 204 along about half the length of the passage part 204 towards the proximal end 215 of the passage part 204.

A top plate 233 stabilizes between the contact surface 205 and the supportive plate 221. The top plate 233 is arranged perpendicular to the supportive plate 221 along the first short side 226 of the supportive plate 221 and perpendicular to the contact surface 205. A triangular shaped support device 234 extends between the supportive plate 233 and the displaced part of the contact surface 205 of the supportive plate 221.

The wall bend fixture additionally comprises, in the shown embodiment, coupling means 250 to connect at least one more wall bend fixture to the wall bend fixture 200. In the shown embodiment according to the present invention, the coupling means 250 comprises two flanges 251, 252 which form a groove 253 which extends parallel with the first long side 213 of the contact surface 205. The groove 253 is intended to be pushed together with an opposing groove of another wall bend fixture (not shown) so that the wall bend fixtures can be connected. Other connection means such as snap on couplings, holes for screws or the like are however possible.

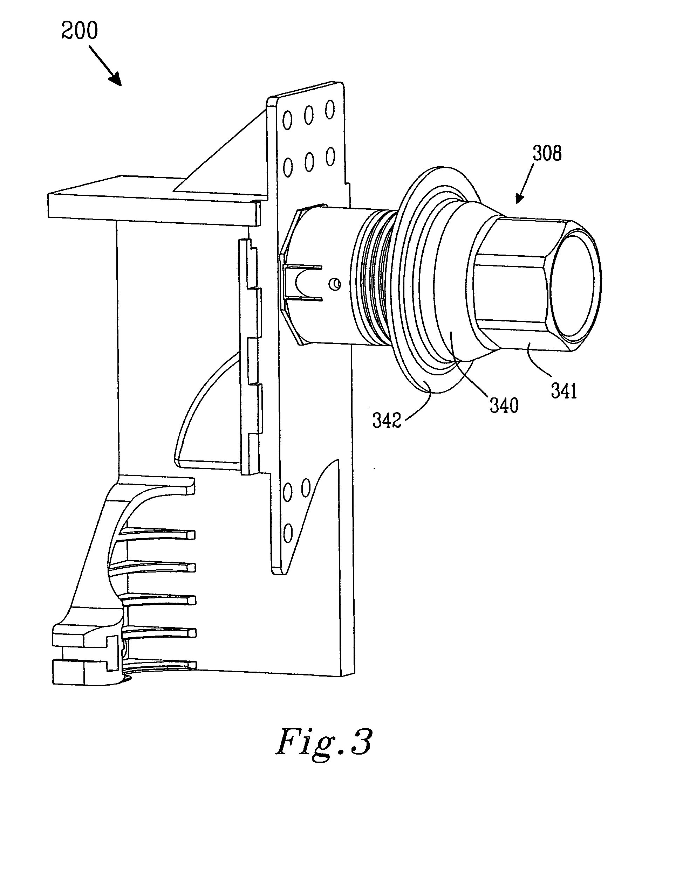

Figure 3 shows a wall bend fixture 200 after being mounted with a fastener 308 in the form of a pipe coupling comprising a first and a second coupling arrangement 340, 341 threaded on the inside. The first inwardly threaded coupling arrangement 340, is a connection plate which comprises a circular wall plate 342 which extends radially out from the centre of the first inwardly threaded coupling device 340. The wall plate 342 preferably has a relatively large contact surface to spread out the tensional forces towards the structure which are formed during attachment of the wall plate 342. The wall plate 342 can alternatively have a relatively large radius, however a small contact surface, to spread the tensional force which is created during attachment.

Between the first and the second inwardly threaded coupling device 340, 341 is a shorter coupling pipe arranged (not shown). The coupling pipe is fixedly connected to the first inwardly threaded coupling device 340 wherein the second inwardly threaded coupling device 341 is arranged to freely rotate, i.e. a swivel connection. A shower blander can for instance be connected to the second inwardly threaded coupling device 341.

Figure 4 shows a wall bend fixture 200 and a protective pipe 209 fixed to the wall bend fixture. A water pipe 210 is arranged in the protective pipe 209. The protective pipe 209 is substantially fixed in its position via a supportive section 220 which purpose is to support the protective pipe during and/or after being mounted, to prevent that the protective pipe is moved out of position. The supportive section 220 comprises, in the shown embodiment according to the present invention, a first and a second pipe holder 224, 225.

The first pipe holder 224 is arranged in association to the first long side 228 of the supportive plate 221 and exhibit, as mentioned earlier, an attachment part 230 with the form of a half circle which extends in association with the first long side 228 of the supportive plate 221. The half circle formed attachment part 230 encompasses about half the protective pipe 209 to hold the protective pipe 209 fixedly to the supportive plate 221, and has a centre at about between the first long side 228 of eth supportive plate 221 and the lengthwise centre line A of the supportive plate 221.

The second pipe holder 225 is arranged in association with the second long side 229 and exhibits a radial curvature 231, which extends substantially from the lengthwise centre line A of supportive plate 221 to the out passage 223 of the supportive plate 221. The radial curvature 231 of the second pipe holder 225 is intended to support the protective pipe 209 during and/or after being brought up from the in passage 222 to the out passage 223.

The second pipe holder 225, which generally can be considered to have a cross section with the form of a quarter of a circle, is integrated with the contact surface 205 and extends from the second long side 229 of the supportive plate 221 in a direction towards the first long side 228 of the supportive plate 221, to about the centre of the supportive plate 221, i.e. up to the lengthwise centre line A. The second pipe holder 225 extends from the lengthwise centre line A with a radial curvature 231 back towards the second long side 229 of the supportive plate 221, to terminate at the out passage 223 of the supportive plate 221. The second pipe holder 225 is preferably as wide as the diameter of the protective pipe 209 to provide a proper support to the protective pipe 209.

The wall bend fixture 200 is in figure 4 arranged to a wall 101 with a first and a second surface 102, 103. The passage part 204 of the wall bend fixture 200 has a proximal end 215 and a distal end 216, and extends through the wall 101 from the first surface 102 past the second surface 103 of the wall 101. The wall bend fixture 200 further exhibit a contact surface 205 which is indirectly contacting via an intermediate sheet (not shown) the first surface 102 of the wall 101.

The outside 206u of the passage part 204 exhibit fastening means 207, in the form of threads, to attach the fastener 308. In the show embodiment the fastener 308 comprises of a pipe coupling for a shower blender, as has been described in connection with figure 3. A protective pipe 209 and a water pipe 210 are brought out through the passage part 204, i.e. that part which extends through the wall 101. The protective part 209 is brought out all the way up to the second surface 103 of the wall 101 while the water pipe 210 is brought past the second surface 103 of the wall 101 and into the fastener 308 were the water pipe can be coupled with a water tight coupling to e.g. a shower blender in a bath room.

The fastener 308 is screwed to the wall bend fixture 200 via fastening means 207, i.e. the threaded surface, so that a tensional force arise between the contact surface 205 and the fastener 308. The tensional force which arises provides for a strong connection and keeps the wall bend fixture and the fastener 308 fixed in their positions. In the shown embodiment according to the present invention, the wall bend fixture 200 does in principal not to be attached to the wall 101 with anything else than the fastener. To provide a steady and firm coupling between the wall bend fixture 200 and the fastener 308, the contact surface 205 is preferably made with an effective area of >5 cm², preferably 5-40 cm², more preferably 10-30 cm ². Any holes in the effective area of the contact surface 205 are not included. By using such an effective area the fastener can be strained towards the wall bend fixture 200 hard enough without risking fractures in the wall 101.

The passage part 204 exhibit an inside 206i comprising a first inner diameter Dᵢ₁ and a second inner diameter Dᵢ₂, wherein Dᵢ₁ > Dᵢ₂. The first inner diameter Dᵢ₁ is arranged in the direction of the supportive plate 221 and the beginning of the out passage 223. The inner diameter of the passage part 204 is reduced at about half the length of the passage part 204 to the second inner diameter Dᵢ₂, which in the shown embodiment is constant all the way to the distal end 216 of the passage part 204. In another embodiment a third inner diameter Dᵢ₃ is arranged between the second inner diameter Dᵢ₂ and the distal end 216 of the passage part 204. Preferably is Dᵢ₁ > Dᵢ₂ > Dᵢ₃, the inside 206i of the passage part 204 is then exhibiting a gradually decreasing inner diameter. In an alternative embodiment with a reducing inner diameter the reduction of the inner diameter can be continuous in the direction towards the distal end 216 of the passage part 204. The inner diameter can in another embodiment be such that Dᵢ₁ > Dᵢ₂ < Dᵢ₃. The second inner diameter Dᵢ₂ then comprises a flange extending from the inside 206i of the passage part 204, which extends all around the inside 206i.

Between the protective pipe 209 and the passage part 204 is a sealing device 240 arranged. The sealing device 240 is in the shown embodiment in figure 2 comprising of a seal ring 241, such a seal ring can for instance comprise a silicone based material. The seal ring 241 extends around whole of the protective pipe 209 so that a water tight sealing is provided between the protective pipe 209 and the inside 206i of the passage part 204.

The sealing ring 241 is arranged in that part of the passage part 204 with an inner diameter Dᵢ₁. The sealing ring can be attached directly via 2-k form molding. When assembling the protective pipe 209 the protective pipe 209 is advantageously brought in the direction of towards the second surface 103 of the wall 101. The sealing ring 241 is prevented from follow the protective pipe 209 out through the passage part 204, even if the sealing ring 241 would come loose. This is ensured by the reducing inner diameter and in the shown embodiment, by that the inner diameter Dᵢ₁ transcends to the second inner diameter Dᵢ₂.

Additionally shown in figure 4 is a cross section of the fastener 308 after being mounted with the wall bend fixture 200. The fastener 308 comprises as mentioned above a first and a second inwardly threaded coupling device 340, 341 connected with a pipe part 343.

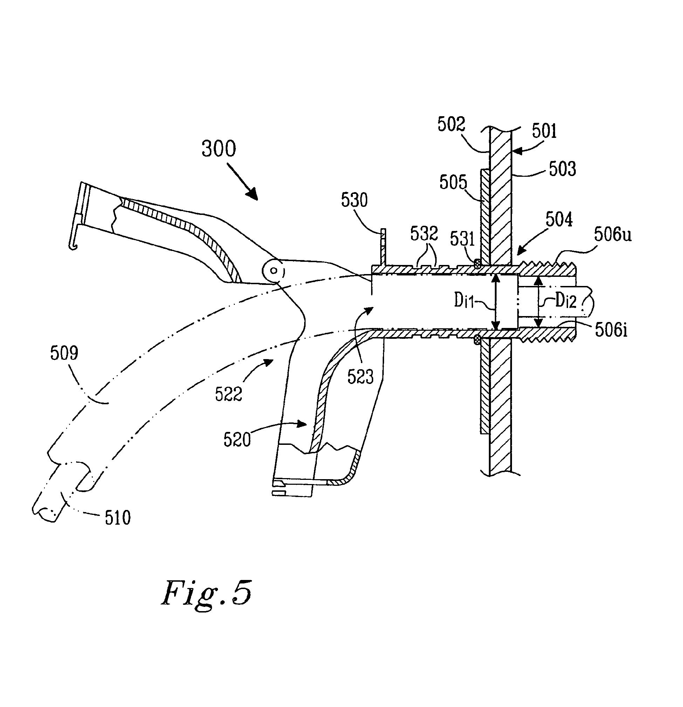

In figure 5 is an alternative embodiment shown of a wall bend fixture 500 according to the present invention. The wall bend fixture 500 has an attached protective pipe 509 and a water pipe 510 arranged in the protective pipe 509. The protective pipe 509 and the water pipe 510 is in the figure only marked as a dotted line. The wall bend fixture exhibit a supportive section 520 intended to support the protective pipe during and after being mounted. The supportive section 520 is in the shown embodiment divisible. The supportive section exhibits an in passage 522 and an out passage for the protective pipe 523. A passage part 504, comprising an outside 506u and an inside 506i, extends from the first surface 502 of the wall 501, through the wall and past the second surface of the wall. The passage part additionally exhibit two different inner diameters, a proximal inner diameter Dᵢ₁ and a distal inner diameter Dᵢ₂, wherein Dᵢ₁>Dᵢ₂. On the outside 506u of the passage part 504 is fastening means 507 arranged. The protective pipe is in the shown embodiment brought out past the second surface 503 of the first wall 501 all the way to the smaller diameter Dᵢ₂. Between the protective pipe 509 and the passage part 504 us a layer of sealant (not shown) in the form of sealing compound arranged to prevent intrusion of water between the protective pipe 509 and the passage part 504.
A contact surface 505 is arranged on the passage part 504, which is contacting a first surface 502 of the wall 501. The contact surface 505 consists of a circle formed plate, which extends around the whole periphery of the passage part 504 and has an effective area of about 60 cm². The passage part 504 exhibits additionally an outer diameter of about 4 cm². The contact surface 505 can be moved along the passage part 504, a stop flange 530 constitute the maximum length of the passage part 504. The contact surface 505 can be fixated from movement in a direction towards the supportive section 520, to the passage part 505 by an attachment ring 531 and at least one around the periphery of the outside 506u of the passage part 504 extending groove 532. The wall bend fixture 500 can be used on walls of varying thickness.

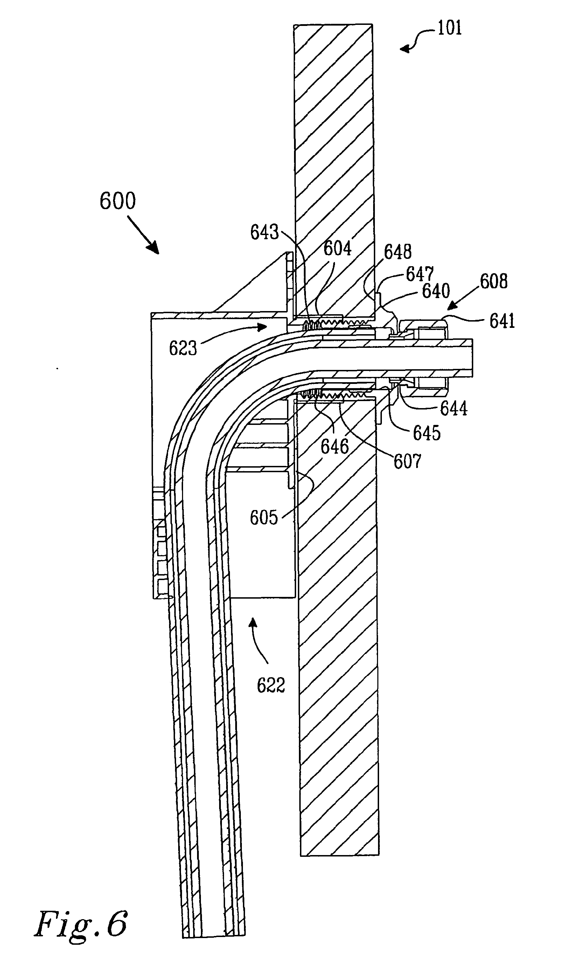

Figure 6 shows an additional embodiment according to the present invention. Figure 6 shows a wall bend fixture 600 which comprises an in passage 622 and an out passage 623 for a pipe-in-pipe tube and a towards the wall 101 contacting contact surface 605. The out passage 623 comprises a passage part 604, comprising fastening means 607 in the form of inwardly arranged threads, adapted to extend through a structure, such as a wall 101. Fixedly arranged to the passage part 604 is a fastener 608. The fastener 608 comprises a first coupling device 640 threaded on the out side and a second coupling device 641 threaded on the inside.

The first coupling device 640 which is threaded on the outside exhibit a substantially cylindrical form and a first and a second end 643, 644, an inside and an outside 645, 646. As mentioned the outside 646 of the first coupling device 640 is threaded to enable to be strained towards the wall 101 via fastening means 607. In conjunction with the second end 644 of the first coupling device 640 is a radially extending wall plate 647 arranged. The wall plate 647 could just as well have a square form or any other form. The wall plate 647 exhibit a contact surface 648 which after being mounted to the fastening means 607 is intended to contact the wall 101 so that the wall bend fixture is kept fixedly between the contact surface 605 of the wall bend fixture and the contact surface 648 of the first coupling device.

The wall bend fixture can be made from metal material, but is preferably made from a termoplastic material such as polyethene, polypropene, polystyrene, polyvinylchloride (PVC), polyurethane, mixtures thereof, or similar material.

## Claims

1. A wall bend fixture (100, 200, 500, 600) for installing a protective pipe (109, 209, 509) and a water pipe (110, 210, 510) arranged in the protective pipe (109, 209, 509), wherein the water pipe (110, 210, 510) is arranged to be brought at least partly through a structure (101, 501) comprising a first surface (102, 502), and to the first surface (102, 502) opposing second surface (103, 503),
said wall bend fixture (100, 200, 500, 600) comprises;
at least one in passage (222, 522, 622) configured to receive said protective pipe (109, 209, 509), and at least one out passage (223, 523, 623) from which at least the water pipe (110, 210, 510) which is arranged in the protective pipe (109, 209, 509), can be guided out from said wall bend fixture (100, 200, 500, 600),
said out passage (223, 523, 623) comprises a passage part (104, 204, 504, 604) which is configured after being mounted to extend past the first surface (102) of the structure, said wall bend fixture (100, 200, 500, 600) also comprises a contact surface (105, 205, 505, 605) adapted to contact said first surface (102, 502) of said structure (101, 501) after mounting,
**characterized in**
**that** said passage part (104, 204, 504) is configured to receive said protective pipe (109, 209, 509) so that said protective pipe (109, 209, 509) after mounting can extend into said passage part (104, 204, 504) and that said passage part (104, 204, 504) comprises fastening means (107, 207, 507) for a fastener (308).

2. The wall bend fixture according to claim 1, **characterized in that** a sealing device (240) is arranged between said protective pipe (109, 209, 509) and said passage part (104, 204, 504, 604).

3. The wall bend fixture according to any preceding claims, **characterized in that** said passage part (104, 204, 504) exhibits a cylindrical form comprising an outside (206u, 506u) and an inside (206i, 506i), wherein said fastening means (107, 207, 507) comprises threads arranged on said outside (206u, 506u).

4. The wall bend fixture according to any preceding claims, **characterized in that** said passage part (604) exhibits a cylindrical form comprising an outside and an inside wherein said fastening means (607) comprises threads arranged on said inside.

5. The wall bend fixture according to any preceding claims, **characterized in that** said fastening means (107, 207, 507, 607) is arranged to provide a tensional force between said contact surface (105, 205, 505, 605) and said fastener (308) after being mounted.

6. The wall bend fixture according to any preceding claims, **characterized in** said passage part (104, 204, 504, 604) is adapted to extend from the first surface (102) of said structure (101), out and past said second surface (103) of said structure (101 after being mounted.

7. The wall bend fixture according to any preceding claims, **characterized in** said fastening means (107, 207, 507, 607) is arranged on the outside (206u, 506u) and on said inside (206i, 506i) of said passage part (104, 204, 504).

## Patentansprüche

1. Wand-Krümmungsbefestigung (100, 200, 500, 600) zum Installieren von einem Schutzrohr (109, 209, 509) und einem Wasserrohr (110, 210, 510), welches im Schutgrohr (109, 209, 509) angeordnet Ist, wobei das Wasserrohr (110, 210, 510) angeordnet Ist, um zumindest teilweise durch einen Baukörper (101, 501), welcher eine erste Fläche (102, 502) enthält, und an einer der ersten Fläche (102, 502) gegenüberliegenden zweiten Fläche (103, 503) angebracht zu werden,
wobei die Wand-Krümmungsbefestigung (100, 200, 500, 600) enthält:
zumindest einen Durchgang (222, 522, 622), welcher ausgelegt ist, das Schutzrohr (109, 209, 509) aufzunehmen, und zumindest einen Ausgang-Durchgang (223, 523, 623), von welchem aus zumindest das Wasserrohr (110, 210, 510), welches im Schutzrohr (109, 209, 509) angeordnet Ist, von der Wand-Krümmungsbefestigung (100, 200, 500, 600) herausgeführt werden kann,
wobei der Ausgang-Durchgang (223, 523, 623) ein Durchgangselement (104, 204, 504, 604) enthält, welches, nach der Befestigung, dazu ausgelegt ist, sich über die erste Fläche (102) des Baukörpers hinweg zu erstrecken, wobei die Wand-Krümmungsbefestigung (100, 200, 500, 600) ebenso eine Kontaktfläche (105, 205, 505, 605) enthält, welche, nach der Befestigung, ausgelegt ist, mit der ersten Fläche (102, 502) des Baukörpers (101, 501) in Kontakt zu treten,
**dadurch gekennzeichnet, dass**
das Durchgangselement (104, 204, 504) dazu ausgelegt Ist, das Schutzrohr (109, 209, 509) derart aufzunehmen, dass sich das Schutzrohr (109, 209, 509), nach der Befestigung, in das Durchgangselement (104, 204, 504) erstrecken kann, und das Durchgangselement (104, 204, 504) ein Befestigungselement (107, 207, 507) für eine Befestigungsvorrichtung (308) enthält.

2. Wand-Krümmungsbefestigung nach Anspruch 1, **dadurch gekennzeichnet, dass** eine Dichtungsvorrichtung (240) zwischen dem Schutzrohr (109, 209, 509) und dem Durchgangselement (104, 204, 504, 604) angeordnet ist.

3. Wand-Krümmungsbefestigung nach einem der vorhergehenden Ansprüche, **dadurch gekennzeichnet, dass** das Durchgangselement (104, 204, 504) eine zylindrische Form hat, welche eine Außenseite (206u, 506u) und eine Innenseite (206I, 506I) hat, wobei das Befestigungselement (107, 207, 507) ein Gewinde enthält, welches an der Außenseite (206u, 506u) angeordnet ist.

4. Wand-Krümmungsbefestigung nach einem der vorhergehenden Ansprüche, **dadurch gekennzeichnet, dass** das Durchgangselement (604) eine zylindrische Form hat, welche eine Außenseite und eine Innenseite hat, wobei das Befestigungselement (607) ein Gewinde - enthält, welches an der Innenseite angeordnet ist.

5. Wand-Krümmungsbefestigung nach einem der vorhergehenden Ansprüche, **dadurch gekennzeichnet, dass** das Befestigungselement (107, 207, 507, 607) dazu angeordnet ist, nach der Befestigung eine Spannkraft zwischen der Kontaktfläche (105, 205, 505, 605) und der Befestigungsvorrichtung (308) bereitzustellen.

6. Wand-Krümmungsbefestigung nach einem der vorhergehenden Ansprüche, **dadurch gekennzeichnet, dass** das Durchgangselement (104, 204, 504, 604) dazu ausgelegt ist, sich nach der Befestigung von der ersten Fläche (102) des Baukörpers (101) aus der zweiten Fläche (103) des Baukörpers (101) heraus und darüber hinweg zu erstrecken.

7. Wand-Krümmungsbefestigung nach einem der vorhergehenden Ansprüche, **dadurch gekennzeichnet, dass** das Befestigungselement (107, 207, 507, 607) an der Außenseite (206u, 506u) und an der Innenseite (206I, 506I) des Durchgangselements (104, 204, 504) angeordnet Ist.

## Revendications

1. Accessoire fixe pour coude mural (100, 200, 500, 600) pour installer un tuyau de protection (109, 209, 509), et un tuyau d'eau (110, 210, 510) agencé dans le tuyau de protection (109, 209, 509), dans lequel le tuyau d'eau (110, 210, 510) est agencé pour être amené au moins partiellement à travers une structure (101, 501) comprenant une première surface (102, 502), et une seconde surface (103, 503) opposée à la première surface (102, 502),
ledit accessoire fixe pour coude mural (100, 200, 500, 600) comprend;
au moins un passage d'entrée (222, 522, 622) configuré pour recevoir ledit tuyau de protection (109, 209, 509), et au moins un passage de sortie (223, 523, 623) à partir duquel au moins le tuyau d'eau (110, 210, 510), qui est agencé dans le tuyau de protection (109, 209, 509), peut être guidé hors dudit accessoire fixe pour coude mural (100, 200, 500, 600),
ledit passage de sortie (223, 523, 623) comprend une partie de passage (104, 204, 504, 604) qui est configurée, après avoir été montée, pour s'étendre au-delà de la première surface (102) de la structure, ledit accessoire fixe pour coude mural (100, 200, 500, 600) comprend également une surface de contact (105, 205, 505, 605) adaptée pour entrer en contact avec ladite première surface (102, 502) de ladite structure (101, 501) après le montage,
**caractérisé en ce**
**que** ladite partie de passage (104, 204, 504) est configurée pour recevoir ledit tuyau de protection (109, 209, 509) pour que ledit tuyau de protection (109, 209, 509), après le montage, puisse s'étendre dans ladite partie de passage (104, 204, 504) et que ladite partie de passage (104, 204, 504) comprend un moyen de fixation (107, 207, 507) pour une pièce de fixation (308).

2. Accessoire fixe pour coude mural selon la revendication 1, **caractérisé en ce qu'**un dispositif d'étanchéité (240) est agencé entre ledit tuyau de protection (109, 209, 509) et ladite partie de passage (104, 204, 504, 604).

3. Accessoire fixe pour coude mural selon de quelconques revendications précédentes, **caractérisé en ce que** ladite partie de passage (104, 204, 504) présente une forme cylindrique comprenant un extérieur (206u, 506u) et un intérieur (206i, 506i), dans lequel ledit moyen de fixation (107, 207, 507) comprend des filets agencés sur ledit extérieur (206u, 506u).

4. Accessoire fixe pour coude mural selon de quelconques revendications précédentes, **caractérisé en ce que** ladite partie de passage (604) présente une forme cylindrique comprenant un extérieur et un intérieur, dans lequel ledit moyen de fixation (607) comprend des filets agencés sur ledit intérieur.

5. Accessoire fixe pour coude mural selon de quelconques revendications précédentes, **caractérisé en ce que** ledit moyen de fixation (107, 207, 507, 607) est agencé pour fournir une force de tension entre ladite surface de contact (105, 205, 505, 605) et ladite pièce de fixation (308) après avoir été monté.

6. Accessoire fixe pour coude mural selon de quelconques revendications précédentes, **caractérisé en ce que** ladite partie de passage (104, 204, 504, 604) est adaptée pour s'étendre à partir de la première surface (102) de ladite structure (101), à l'extérieur et au-delà de ladite seconde surface (103) de ladite structure (101) après avoir été montée.

7. Accessoire fixe pour coude mural selon de quelconques revendications précédentes, **caractérisé en ce que** ledit moyen de fixation (107, 207, 507, 607) est agencé sur l'extérieur (206u, 506u) et sur ledit intérieur (206i, 506i) de ladite partie de passage (104, 204, 504).
